# EUROPÄISCHE PATENTANMELDUNG

(11) **EP 2 123 338 A1**
(43) Veröffentlichungstag der Anmeldung: **25.11.2009**
(21) Anmeldenummer: 09006946.9
(22) Anmeldetag: 22.05.2009
(51) Int. Cl.: A63G 19/18, B62K 9/02

(54) **Kinderrutscher, insbesondere Babyrutscher**

(30) Priorität: 23.05.2008 DE 102008024833; 19.06.2008 DE 102008029207
(71) Anmelder: Bauer, Johannes, 85567 Grafing (DE)
(72) Erfinder: Bauer, Johannes, 85567 Grafing (DE)
(74) Vertreter: Castell, Klaus

(57) **Zusammenfassung**

Ein Kinderrutscher, insbesondere Babyrutscher für Kleinkinder besteht aus einem länglichen, flachen Körper (2) in stilisierter Nachbildung z. B. eines Tieres, mit zwei Rollelementen an der Unterseite des Körpers (2), einem Sitzelement (10) und zwei Griffen (20) am vorderen Oberteil des Körpers. Wesentlich ist, dass am Vorderteil zwei auseinander stehende Rollelemente (14) und am Hinterteil (7) nur ein Rollelement (18) vorgesehen sind, wobei die vordere Spurbreite (26) und der Radstand (27) so ausgelegt sind, dass der Schwerpunkt des Kleinkindes, das den Rutscher gehend oder sitzend bewegt, auch bei Vorneigen und/oder zumindest leichtem Seitlichneigen nicht außerhalb des durch die drei Rollelemente (14, 14' und 18) gebildeten Auflage-Dreiecks fällt.

## Beschreibung

Die Erfindung bezieht sich auf einen Kinderrutscher, insbesondere Babyrutscher gemäß Oberbegriff des Anspruchs 1, wie er allgemein auch als Lauflemhilfe Verwendung findet oder finden soll.

Solche Kinderrutscher, auch bekannt unter den Bezeichnungen Babyrutscher, Kinderrutscher, Laufrad für Kinder, Rutschauto, Bobby Car usw., sind bereits in unterschiedlichsten Ausführungen am Markt. Sie sind jedoch ungeeignet zur Verwendung als echte Geh-Lern-Hilfe für ein Baby ab 8 Monate, das noch recht wackelig auf den kurzen Beinen steht und noch keine Kraft hat, mit relativ breit auseinandergespreizten Beinen auf einem Rutscher sitzend seitlich mit den Beinen das Fahrzeug anzuschieben. Zudem sind diese Rutscher nicht ausreichend kippsicher, da sie eine relativ große Sitzhöhe von meist 25 cm besitzen und vierrädrig sind, mit relativ enger Radspur, die meist vorne zudem kleiner ist als hinten. Da nun auch Kleinkinder die Tendenz haben, beim Anschieben sich nach vorne in Richtung auf die Griffe oder den Lenker zu neigen und bekanntlich Kleinkinder zudem relativ kopflastig sind, ist die Gefahr sehr hoch, dass sie mit dem Rutscher seitlich und/oder nach vorne wegkippen.

So sind z. B. die Babyrutscher oder Zimmerrutscher "Tiger" oder "Kuh" der Fa. I'm Toy bekannt (auch unter www.amazon.de angeboten), die im wesentlichen in Art eines Dreirades aufgebaut sind. Sie besitzen statt einem Vorderrad mit Pedalen, zwei relativ nahe beabstandete Vorderräder, so dass die Spurbreite (Radabstand) vorne bedeutend geringer ist als hinten und einen flachen, breiten Sitz mit Sitzkissen, der zudem relativ och ist. Dadurch sind die Stürze für ein sich vorzugsweise nach vorne neigendes Kleinkind fast unvermeidbar, weshalb wohl auch diese Rutscher für ein Alter ab 19 Monate empfohlen werden.

Der Kinderrutscher "Bobby Car" der Fa. BIG, der in diversen Größen und Formen bekannt ist, ist ein Klein-Fahrzeug in Auto-Form, mit sehr breitem Sitz und vier Rädern mit gleicher Spurbreite, wie auch aus den DE 299 12 291 U1 und DE 73 15 287 U1 zu entnehmen ist. Insbesondere durch die große Sitzbreite, die ein Stehendes Gehen mit dem Fahrzeug nicht erlaubt, ist auch dieser Rutscher für Kinder unter 12 Monate zum Zwecke des Gehenlernens nicht geeignet.

Die Firma BIG bietet des weiteren die "Rutscher mit Laufhilfe" BIG-Baby-Walk-Fanty und BIG-Walk-Pony-Princess an (siehe auch unter www.big.de), die einen äußerst breiten Kunststoffkörper in stilisierter Tierform besitzt, mit vier Rädern in gleicher Spurbreite und einen breiten Sitz mit einer Rückenlehne, die auch zum Anschieben benutzbar ist. Ein echtes Gehen in diesen Rutschern, mit relativ eng nebeneinander befindlichen Beinen, ist für ein Kleinkind von unter einem Jahr (ab 8 Monate) nicht möglich.

Die optisch sehr ansprechenden Rutscher der Fa. Bambinolino (siehe auch unter www.bambinolino.de), besitzen einen plattenförmigem Holzkörper in Form unterschiedlichster stilisierter Phantasietiere (Marienkäfer, Biene, Giraffe, Ente, usw.), mit beweglichem Körper-Vorderteil zum Kurvenfahren sowie mit vier Rädern, wobei die Spurbreite hinten bedeutend größer ist als vorne. Dadurch dass zudem eine relativ große Sitzhöhe von 25 cm und eine Rutscher- Breite von nur 20 cm vorgesehen ist, ist eine sehr hohe Kippgefahr vorhanden, die durch die Beweglichkeit des Vorderteiles noch zusätzlich verstärkt wird. Daher wohl empfohlen für Kinder ab 12 Monate.

Ebenfall von Bambinolino ist ein Zimmerrutscher in der stilisierten Form einer Giraffe oder eines Schafes (www.bambinolino.de), mit einem sehr massig-breitem Körper, an dessen Unterseite ein Kranz mit sechs Rollen vorhanden ist, wie auch in den DE 295 10 627 U1 und DE 295 15 785 U1 beschrieben. Zum Gehen Lernen eines Kleinkindes unter einem Jahr sind diese Rutscher auch nicht geeignet

Der Babyrutscher Winnie Puh von Smoby ist zwar auch für Kleinkinder unter einem Jahr geeignet, jedoch nicht als Gehhilfe, sondern nur geschoben über eine hintere Schiebestange. Er stellt ein lenkbares, relativ breites Fahrzeug dar (Rutscherauto), mit vier Rädern, breitem, relativ hohem Sitz, die das Kind zwingen, die Beine weit auseinandergegrätscht zu halten. Zum Laufen Lernen eine Kindes unter 1 Jahr ist dieser Rutscher ebenfalls nicht geeignet.

Schließlich ist auch ein Kinderrutscher Janosch Tigerente von Ferbedo bekannt (siehe unter www.spielgeist.de), der einen sehr breiten Holzkörper und daran vier Räder mit einer Spurbreite unter 30 cm besitzt und daher nicht ausreichend kippsicher ist. Als Geh-Lern-Hilfe ist dieser Rutscher auch nicht geeignet, da der körperbreite Sitz zu breit und zudem kein Platz für die Füße zwischen den seitlich angebrachten, sehr nahe zueinander stehen großen Vorder- und Hinterrädern vorhanden ist.

Aufgabe der Erfindung ist es somit, einen Kinderrutscher o. g. Gattung anzugeben, der insbesondere für Kleinkinder bereits ab 8 und bis 12 Monaten geeignet und (kipp-) sicher insbesondere als echte Geh-Lern-Hilfe benutzbar ist, den also ein Baby "in ihm gehend", also mit dem Gesäß über dem Sitz befindlich, stehend/gehend vor sich her schieben kann, sich dabei an den Griffen festhaltend und nur hilfsweise über den Sitz abgestützt, ohne Schieben über die Füße im Sitzen.

Diese Aufgabe wird durch einen Kinderrutscher mit den Merkmalen des Anspruches 1 gelöst. Weitere vorteilhafte Ausgestaltungen werden in den Unteransprüchen näher beschrieben.

Demgemäß sind am Vorderteil zwei zum plattenförmigen Körper und zueinander relativ weit auseinander stehende Rollelemente vorgesehen, während an der Rückseite nur ein einziges Rollelement auf der Längsmittellinie am Körper angeordnet ist. Schließlich sind der vordere Rollelement-Abstand (Vorderspur, Spurbreite) und der Abstand zwischen Vorder- und Hinter-Rollelementen (Rad-/Achsabstand) so ausgelegt, dass der Schwerpunkt des den Rutscher gehend oder nur gelegentlich sitzend vor sich her geschoben führenden Kleinkindes auch bei schiebendem Vorneigen und zumindest leichtem Seitlichneigen nicht außerhalb des durch die drei Rollelemente gebildeten Abstütz-Dreiecks fällt. Somit ist sichergestellt, dass das Kleinkind beim Schieben des Rutschers mit den Händen, auch in vorgebeugter, etwas einseitiger Schiebestellung, nicht schräg-seitlich umkippt.

Zwar ist aus der GB 318 400 A ein Kinderwagen bekannt, der ebenfalls drei Rollelemente (Räder) besitzt, nämlich zwei an der Vorderseite und eines an der Rückseite. Dabei sind die Spurbreite und der Radabstand so ausgelegt, dass das Fahrzeug kippsicher ist. Es ist jedoch mittig ein Sitz mit Lehne und Anschall-Vorkehrungen vorhanden, so dass ein Kleinkind nur sitzend, mit den Beinen nach vorne eventuell schieben/ stoßen kann. Die Möglichkeit, stehend oder gehend das Fahrzeug zu bewegen, ist nicht vorhanden, so dass dieses Fahrzeug insbesondere als Geh-Lernhilfe (Babyrutscher) nicht geeignet ist.

Von Vorteil ist, wenn der Abstand der vorderen Rollelemente zueinender (Spurbreite) ca. 35 - 55 cm, vorzugsweise ca. 40 cm und der Achsabstand zwischen den vorderen Rollelementen und dem rückwärtigen Rollelement 40 - 60 cm, vorzugsweise 45 cm beträgt. Hierdurch wird den Besonderheiten der Größenverhältnisse und Kopflastigkeit eines Kleinkindes Rechnung getragen.

Dadurch dass zudem die Rollelemente allseitig (360°) schwenk-rotierende bzw. drehbare Kugeln, Rollen oder rollenartig bewegliche Räder, ähnlich wie an Bürostuhlrädern, und/oder fest angebrachte Räder sind, wird der große Vorteil erreicht, dass auch ohne lenkbares Vorderteil des Körpers ein sehr hohe Wendigkeit vorhanden ist. Ohne Schwenk-Lenk-Manöver, nur durch einfaches seitliches Schieben an den Griffen, praktisch durch Wenden des Körpers, ist eine Richtungsänderung möglich.

Werden nur die beiden vorderen Rollelemente als allseitig drehbare Elemente oder Räder d. h. um eine Vertikal-Achse 360° schwenk-rotierbar in Art von Bürostuhl-Rädern ausgelegt, während das hintere Rollelement ein fest angebrachtes, nicht schwenkbares Rad mit balliger Mantelfläche ist, das im wesentlichen in Punktauflage aufliegt bzw. sich abstützt, dann wird eine optimale Wendigkeit erreicht, mit einem Wenderadius gleich dem Abstand zwischen Vorderrädern und Hinterrad. Dies ist für ein geh- und fahrungeübtes Kleinkind besonders wichtig, da es dessen natürliches Bewegungsvermögen unterstützt.

Die vorderen Räder sind in vorteilhafter Weise an der Unterseite eines Joches angeordnet, das seinerseits im wesentlichen quer zum Körper verlaufend und vorzugsweise an dessen vorderer Unterseite fest angebracht ist. Zudem können die freien Oberseiten des Joches als Fußauflagen für ein am Rutscher-Sattel bzw. Rumpfoberseite aufsitzendes Kleinkind ausgelegt sein.

Von Vorteil ist, dass der Körper die Form einer Platte besitzt und aus Holz oder Kunststoff oder einer Kombination aus diesen und/oder anderen Materialien besteht und dass bei Ausführung des Körpers aus Holz eine Dicke von ca. 2,5 - 5 cm, vorzugsweise ca. 4 cm vorgesehen ist. Holz hat zudem den Vorteil eines höheren Gewichts und damit eines tieferen Schwerpunkts während der Verwendung.

Besitzt dann zudem der Sattel eine Sitzhöhe von nur ca. 15 - 20 cm, vorzugsweise maximal 18 cm und eine Breite von höchstens 3facher Dicke des Körpers, vorzugsweise max. ca. 9 cm. Der Körper kann aber auch sattellos vorgesehen sein, wobei dann die Oberseite des im wesentlichen mittigen Körperrumpfes als Sitz dient. Ein Kleinkind schon ab acht Monaten kann nun in nur ganz leichter Grätsche im Rutscher stehen und diesen vor sich herschiebend gehen, ohne durch den Sitz in seiner Gehbewegung behindert zu werden. Bei Ermüden oder aus Spaß oder Schreck kann es sich aber auf dem schmalen Sitz oder noch schmaleren Körperoberseite zumindest kurz niederlassen.

Vorteilhaft wirkt sich auch aus, wenn die Griffe in Richtung Sitzelement im Verhältnis zu den vorderen Rollelementen zumindest geringfügig, zumindest aber 1 - 12 cm, vorzugsweise 6 cm nach hinten versetzt und in einer Höhe zum Boden von ca. 25 - 40 cm, vorzugsweise von 30 cm angeordnet sind. Hierdurch wird der Größe und der Position eines Kleinkindes beim Gehen Rechnung getragen.

Am Vorderende (Schnauze) und/oder Rückende (Gesäßseite) des Körpers kann mindestens je eine Zugeinrichtung z. B. in Form einer Kordel oder eines Seiles o. ä. vorgesehen sein, vorzugsweise mit einer endseitigen Verdickung in Form einer Kugel oder Spule o. ä. Dadurch besteht die Möglichkeit, den Rutscher spielerisch zu ziehen, auch als zusätzliche Hilfe für das im Rutscher stehend befindliche Kleinkind, das sich zwar an den Griffen festhält, aber eventuell noch nicht begriffen hat, dass es z. B. einen Druck nach vorne auf die Griffe ausüben muss, um vorwärts zu kommen.

Schließlich ist von Vorteil, wenn der Körper mit einem textilen Überzug versehen ist, z. B. aus weichem, flauschigem und/oder pelzähnlichem Material, je nach dem, welcherart Fahrzeug oder Lebewesen (Tier- oder Fabelwesen) er stilisiert nachgebildet ist. So kann der Überzug aus einem dicken Material bestehen oder mit einem dicken Innenfutter versehen sein. Es kann aber auch das Futter als selbstständiger, separater Innen-Überzug vorgesehen sein.

Ist dann der Körper so ausgebildet, dass er von hinten nach vorne an Höhe zunimmt, dann kann der Überzug oder können die Überzüge im wesentlichen schlauchförmig vorgesehen sein, so dass er/sie von hinten nach vorne aufgeschoben werden und an der Vorderseite über Druck- oder Klettverschlüsse befestigt werden kann oder können. Der Überzug (oder die Überzüge) kann nun bedarfsweise abgezogen und gewaschen oder gereinigt werden. Er kann aber auch gegen einen anderen Überzug (neu, andere Farbe, oder Musterung usw.) ausgetauscht werden, wodurch einen große (Gestaltungs-) Flexibilität mit der Möglichkeit, unterschiedlichen Geschmäckern oder Bedürfnissen in einfacher Weise gerecht zu werden, entsteht.

Nachfolgend wird die Erfindung anhand von Ausführungsbeispielen unter bezug auf die Zeichnung näher erläutert.

Es zeigen:
- Fig. 1:: eine Seitenansicht eines Kinderrutschers in erster Ausführung als stilisierter Hund,
- Fig. 2:: eine Draufsicht des Kinderrutschers aus Fig. 1,
- Fig. 3:: eine Ansicht von hinten des Kinderrutschers nach Fig. 1,
- Fig. 4:: eine Perspektivansicht von vorne eines Kinderrutschers in zweiter Ausfüh- rung als Tigerente,
- Fig. 5:: eine seitliche Perspektivansicht des Kinderrutschers nach Fig. 4,
- Fig. 6:: eine Seitenansicht eines Kinderrutschers in dritter Ausführung, als Einhorn, ohne Sattel,
- Fig. 7:: eine Rückansicht des Rutschers nach Fig. 6,
- Fig. 8:: eine vordere Perspektivansicht eines Kinderrutschers in vierter Ausführung, unbehandeltes Holz,
- Fig. 9:: eine Seitenansicht eines Kinderrutschers in fünfter Ausführung als Rabe, mit flauschigem Überzug, und
- Fig. 10:: eine Seitenansicht wie in Fig. 9, jedoch mit abgenommenem Flausch- Überzug und Weich-Innenfutter.

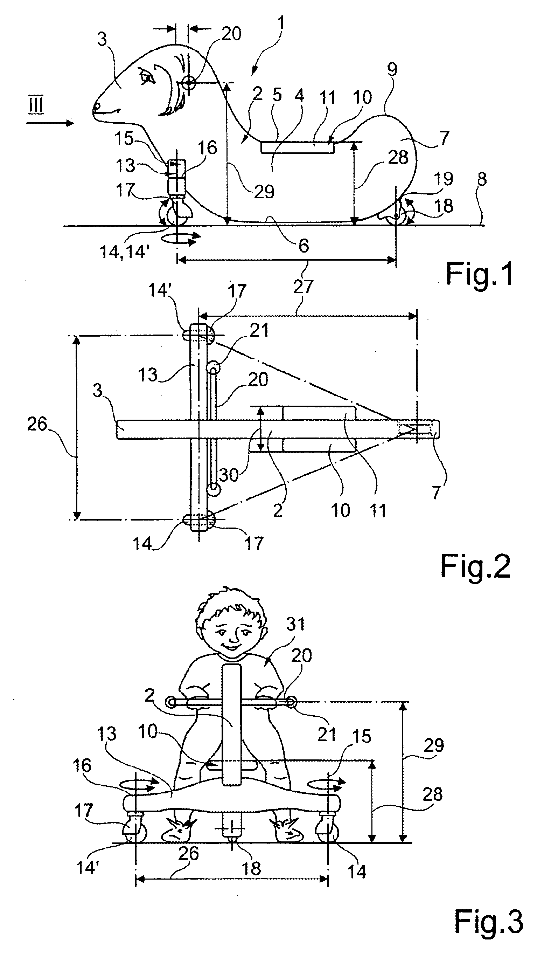

Wie aus **Fig. 1** zu erkennen ist, besteht der erfindungsgemäße Kinderrutscher 1 in erster Ausführung, der einem stilisierten Hund nachempfunden ist, im Wesentlichen aus einem flachen Körper 2, der in vorteilhafter Weise aus einem dicken Holzbrett von beispielsweise 4 cm Dicke herausgearbeitet ist. Er weist an seiner Vorderseite einen Kopf 3 auf und zwar in Form eines Hundekopf-Profils, mit entsprechenden Zeichnungselementen versehen. Der mittige Rumpf 4 ist relativ niedrig und gerade gehalten, mit einem geraden, zur Bodenfläche 8 im Wesentlichen parallel ausgerichteten Rücken 5, der vorzugsweise von der Bodenfläche in einer maximalen Höhe von 18 cm vorgesehen ist. Entsprechend ist der Bauch 6 bzw. die entsprechende Bauchfläche ebenfalls gerade oder nur leicht geschweift, nur geringfügig zur Bodenfläche 8 beabstandet und nahezu parallel zu dieser ausgerichtet bzw. ausgelegt. Es ist zu erkennen, dass der Rumpf 4 sehr niedrig und gedrungen, also nahezu "erdverbunden" vorgesehen ist. Der Körper 2 ist durch ein nach oben und hinten abgerundetes Hinterteil 7 entsprechend formschön und gleichzeitig als den Sitz nach hinten durch die obere Rundung 9 begrenzend ausgebildet.

In der Zone des geraden Rückens 5 ist beidseitig je eine Sitzleiste 11 so angebracht, dass sie gemeinsam ein Sitzelement 10, bzw. einen Sitz oder schmalen Sattel bilden, mit ebener, insgesamt relativ schmaler Sitzfläche.

An der unteren Vorderseite des Körpers 2 ist zudem ein zu diesem quer verlaufendes, relativ weit in der Breite ausholendes Joch 13 fest angebracht, z. B. über entsprechenden Ausschnitt und zentrische Schraube. An den beiden Enden des Joches 13 ist unterseitig jeweils ein Rollelement in Form von Vorderrädern 14, 14' vorgesehen, das in Art von Rollstuhlrädern ausgebildet ist, so dass ein leichtes Rollen und gleichzeitig ein Verschwenken bzw. Rotieren um dessen Vertikalachse 15 möglich ist. Hierdurch ist eine ällseitige Beweglichkeit, also eine leichte Rollfähigkeit in jegliche Richtung, optimal möglich. Wie insbesondere auch aus Fig. 3 ersichtlich ist, ist an den Oberseiten des Joches 13 jeweils eine Abflachung als Fußablage 16 vorgesehen.

An der Unterseite des Körpers 2 und zwar unterhalb des Hinterteiles 7, ist im Wesentlichen mittig zur Plattenbreite des Körper 2 ein Rollkörper als Hinterrad 18 mit seiner Rad-Halterung 19 angebracht, das ein feststehendes, also nicht verschwenkbares Hinterrad darstellt, das zudem eine abgerundete Mantelfläche besitzt (Punktauflage).

Am Kopf 3 sind in entsprechender Höhe von ca. 30 cm und etwas zurückgesetzt im Vergleich zur Vertikalachse 15 der Vorderräder 14, seitlich abstehende zylindrische Griffe 20 vorgesehen, die an ihren Enden als Abrutschbegrenzung je eine Kugel 21 besitzen.

Aus **Fig. 2****,** aber auch aus **Fig. 3** ist insbesondere die Anordnung der erfindungsgemäßen Elemente gut zu erkennen, nämlich die relativ große Spurbreite 26, also der Abstand zwischen den Vorderrädern 14, von vorzugsweise ca. 40 cm Breite, der relativ große Radstand 27, also der Abstand zwischen Vorderrädern 14 und Hinterrad 18, von vorzugsweise ca. 45 cm, die relativ geringe Sitzhöhe 28 von ca. 18 cm und die Griffhöhe 29 von ca. 30 cm. Dies und die geringe Sitzbreite 30 von vorzugsweise unter 10 cm ermöglichen die große Kippsicherheit und die Benutzung als sehr wirkungsvolle Gehlernhilfe für ein Kleinkind ab ca. acht Monaten, wie dies insbesondere aus Fig. 3 durch das skizzenhaft eingezeichnete Kleinkind 31ersichtlich ist.

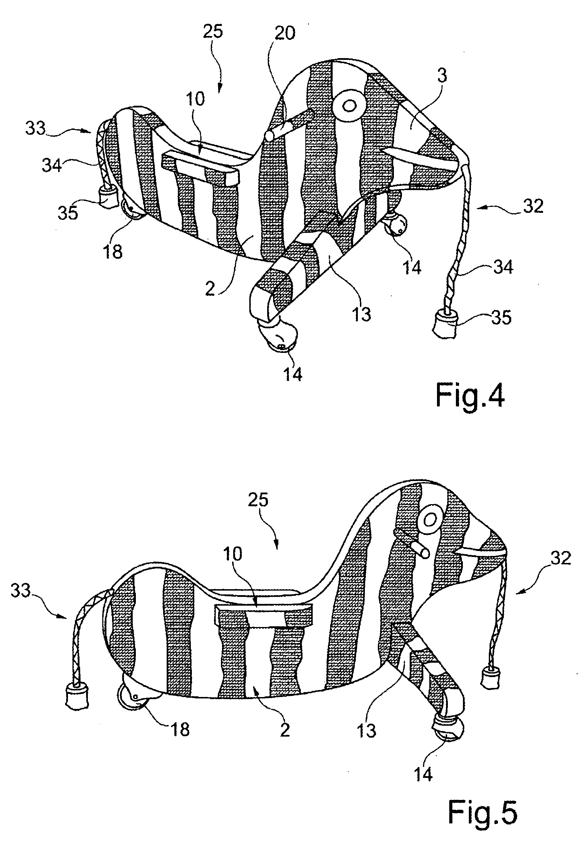

In **Fig. 4** und **Fig. 5** und ist ein erfindungsgemäßen Kinderrutscher 25 in zweiter Ausführung dargestellt und zwar angenähert in Form der allgemein bekannten Janosch Tigerente, zumindest was die Körperform und Zeichnung anbelangt. In Vergleich zur Ausführungsform nach Fig. 1 bis 3 ist hier nur unterschiedlich, dass der Kopf 3 ca. die Form der Janosch Tigerente besitzt, die gestreifte Zeichnung vorhanden ist und dass am Vorderende und am Hinterende des Körpers 2 je eine Zugeinrichtung 32 bzw. 33 vorgesehen ist.

Die vordere Zugeinrichtung 32 als auch die hintere Zugeinrichtung 33 bestehen aus je einer Kordel 34, an deren Ende ein spulenförmiger Körper 35 angebracht ist. Dabei sind die jeweiligen Kordeln 34 in ihrer Länge so ausgelegt, dass die Körper 35 knapp über dem Boden enden oder auf diesem nur ganz leicht aufstehen.

Man sieht auch aus diesem Ausführungsbeispiel wie erdverbunden, sicher und bullig dieser Kinderrutscher konzipiert ist.

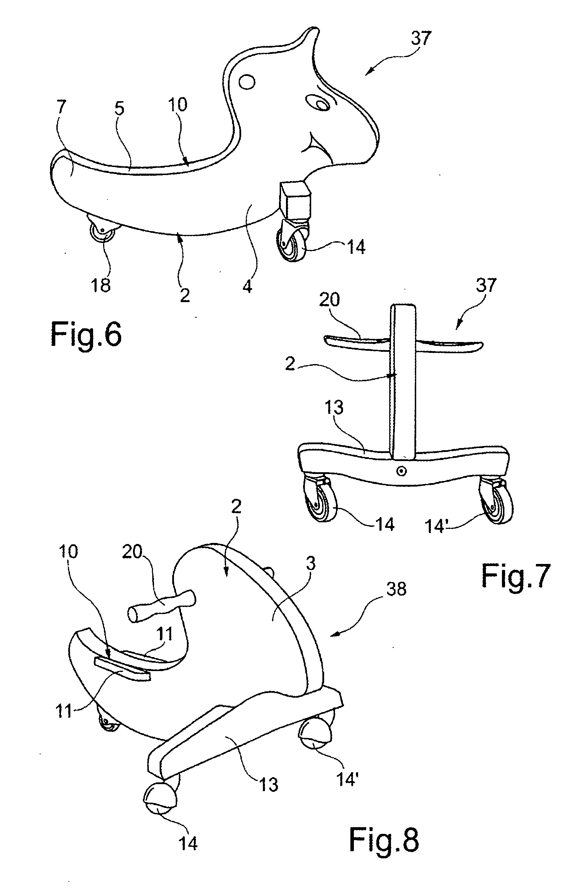

**Fig. 6 und 7** zeigen einen Einhorn-Kinderrutscher 37, der prinzipiell ähnlich den vorhergehenden ausgebildet ist, nur dass hier kein separates Sitzelement (Sitzleisten) vorgesehen ist, sondern der Rumpf-Rücken 5 dient gleichzeitig auch als schmales Sitzelement 10. Zudem ist der Rumpf 4 schlanker ausgelegt und das Hinterteil 7 läuft relativ flach geschwungen aus.

Fig. 7 lässt erkennen, dass hier glatte, leicht nach oben geschweifte Griffe vorhanden sind und das Joch in anderer Richtung geschweift oder abfallend ausgebildet ist, als bei den vorhergehenden Kinderrutschern 1 und 25. Auch besitzen die Vorderräder eine etwas andere Ausführungsform als bei den vorhergehenden Kinderrutschern.

**Fig. 8** zeigt als vierte Ausführungsform einen Kinderrutscher 38 der bezüglich der Körperform dem Kinderrutscher 37 aus Fig. 6 gleicht, nur dass hier der Kopf 3 kein Horn trägt. Zudem ist, ähnlich wie bei den Kinderrutschem 1 und 25 aus Fig. 1 bis 5 ein sattelförmiges Sitzelement 10 mit zwei Sitzleisten 11 vorgesehen. Auch ist das Joch nach außen abfallend ausgebildet, ähnlich wie in Fig. 4 und 5, während die Griffe 20 eine Profilierung aufweisen.

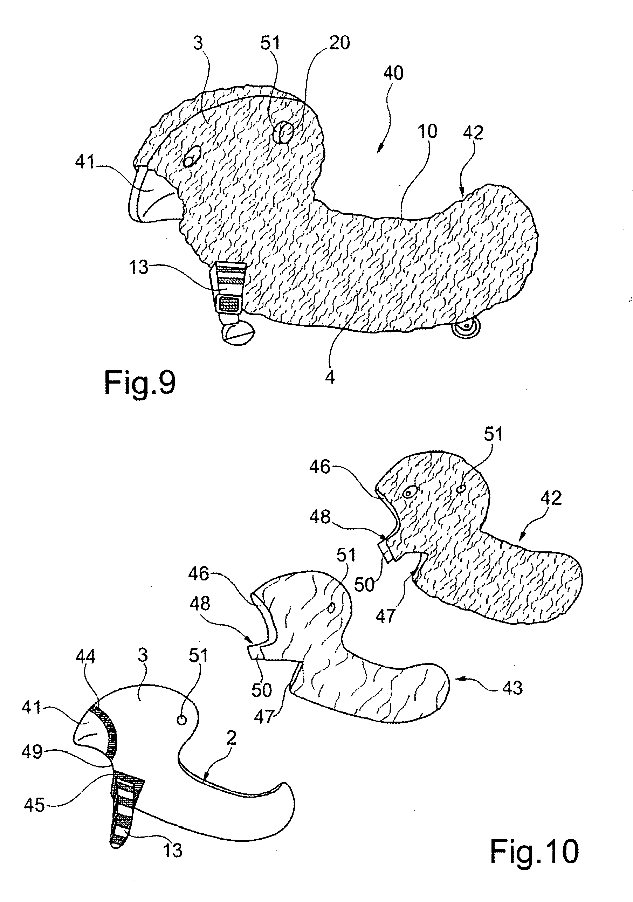

**Fig. 9 und 10** zeigen schließlich als fünfte Ausführungsform einen Kinderrutscher 40, der in Form und Farbe einem schwarzen Raben mit einem Schnabel 41 ähnlich sieht. Der Kopf 3 und der Rumpf 4 ist mit einem schwarzen, flauschigen Überzug 42 versehen, wobei lediglich der Schnabel 41 frei geblieben ist, sowie das Joch 13.

Der Überzug 42 ist dabei abnehmbar ausgeführt, wie aus Fig. 10 erkennbar ist. Zudem ist zu erkennen, dass neben dem äußeren (schwarzen) Überzug 42 auch ein (weißes) Innen-Futter 43 vorgesehen ist, wobei Überzug 42 und Futter 43 so ausgelegt sind, dass sie übereinander aufgezogen auf dem Holz-Körper 2 diesen genau und fest umkleiden. Dafür sind am Rand des Schnabels 41 und am Ausschnitt des Jochs 13 je ein Klettverschluss-Element vorgesehen, die mit Klett-Teilen auf den Ausschnitten 46, 47 des Überzugs 42 und Futters 43 zusammenwirken.

Zudem sind zwischen den Ausschnitten 46, 47 jeweils Hals-Lappen 48 vorhanden, die den Halsabschnitt 49 zwischen Schnabel und Joch umgreifen und über Klett-Teile 50 miteinander verbindbar sind. Schließlich sind im Kopf 3 des Körpers 2, des Überzugs 42 und des Futters 43 jeweils eine quer durchgehende Öffnung vorgesehen zum Durchstecken und Befestigen der Griffe 20.

Beim Abnehmen des Überzugs sind zuerst die Griffe 20 zu entfernen, die Klettverschlüsse 44, 45 und die Halslappen 48 zu lösen (Klettverschluss öffnen), danach der obere Überzug 42 nach hinten abzuziehen, wonach in gleicher Weise das darunter befindliche Innen-Futter 43 abgezogen wird. Nach dem Waschen werden diese Überzüge in umgekehrter Reihenfolge wieder von hinten nach vorne aufgeschoben, die Klettverschlüsse ordnungsgemäß geschlossen und zuletzt die Griffe montiert.

### Bezugszeichenliste

- 1.: Kinderrutscher, 1. Ausführung
- 2.: Körper
- 3.: Kopf
- 4.: Rumpf
- 5.: Rücken
- 6.: Bauch
- 7.: Hinterteil
- 8.: Bodenfläche
- 9.: Rundung
- 10.: Sitz, Sitzelement (Sattel)
- 11.: Sitzleisten
- 12.: ---
- 13.: Joch
- 14.: Rollelement, Vorderräder
- 15.: Vertikalachse
- 16.: Fußauflage
- 17.: Halterung, Rad-
- 18.: Rollelement, Hinterrad
- 19.: Radhalterung
- 20.: Griff
- 21.: Kugeln
- 22.: ---
- 23.: ---
- 24.: ---
- 25.: Kinderrutscher, 2. Ausführung
- 26.: Spurbreite
- 27.: Radstand
- 28.: Sitzhöhe
- 29.: Griffhöhe
- 30.: Sitzbreite
- 31.: Kleinkind
- 32.: Zugeinrichtung
- 33.: Zugeinrichtung
- 34.: Kordel
- 35.: Körper (Spulen-Körper)
- 36.: ---
- 37.: Kinderrutscher, 3. Ausführung
- 38.: Kinderrutscher, 4. Ausführung
- 39.: --
- 40.: Kinderrutscher, 5. Ausführung
- 41.: Schnabel
- 42.: Überzug
- 43.: (Innen-) Futter
- 44.: Klettverschluss-Element
- 45.: Klettverschluss-Element
- 46.: Ausschnitt
- 47.: Ausschnitt
- 48.: Halslappen
- 49.: Halsabschnitt
- 50.: Klett-Teile
- 51.: Öffnung

## Patentansprüche

1. Kinderrutscher insbesondere Babyrutscher, mit
- einem länglichen, flachen Körper in stilisierter Nachbildung z. B. eines Tieres oder Fahrzeuges,
- zwei Rollelementen an der Unterseite des Körpers,
- einem Sitzelement,
- und zwei Griffen am vorderen Oberteil des Körpers,
**dadurch gekennzeichnet,**
- **dass** am Vorderteil zwei auseinander stehende Rollelemente (14, 17) und am Hinterteil (7) ein Rollelement (18, 19) vorgesehen sind,
- wobei der vordere Rollelement-Abstand, d. h. die Spurbreite (26) und der Abstand zwischen Vorder- und Hinter-Rollelementen, d. h. der Radabstand (27) so ausgelegt sind, dass der Schwerpunkt eines Kindes, das den Rutscher (1, 25) gehend oder sitzend bewegt, auch bei Vorneigen und/oder zumindest leichtem Seitlichneigen nicht außerhalb des durch die drei Rollelemente (14, 14' und 18) gebildeten Auflage-Dreiecks fällt.

2. Kinderrutscher nach Anspruch 1, **dadurch gekennzeichnet,**
**dass** die Spurbreite (26) ca. 35 - 55 cm, vorzugsweise 40 cm und der Radstand (27) ca. 40 - 60 cm, vorzugsweise 45 cm beträgt.

3. Kinderrutscher nach Anspruch 1, **dadurch gekennzeichnet,**
**dass** die Rollelemente allseitig (360°) schwenk-rotierende bzw. drehbare Kugeln, Rollen oder rollenartig bewegliche Räder, ähnlich wie Bürostuhlräder, und/oder fest angebrachte Räder sind.

4. Kinderrutscher nach Anspruch 3, **dadurch gekennzeichnet,**
**dass** die beiden vorderen Rollelemente Kugel-Rollen oder allseitig drehbare Räder (14), d. h. um eine Vertikal-Achse 360° schwenk-rotierbar sind, in Art von Bürostuhl-Rädern, während das hintere Rollelement ein fest angebrachtes, nicht schwenkbares Rad (18) mit balliger Mantelfläche ist und im wesentlichen in Punktauflage aufliegt bzw. sich abstützt.

5. Kinderrutscher nach Anspruch 4, **dadurch gekennzeichnet,**
**dass** die vorderen Räder (14, 17) an der Unterseite eines Joches (13) angeordnet sind, das seinerseits im wesentlichen quer zum Körper (2) verlaufend und vorzugsweise an dessen vorderer Unterseite, fest angebracht ist.

6. Kinderrutscher nach Anspruch 5, **dadurch gekennzeichnet,**
**dass** die seitlichen Oberseiten des Joches als Fußauflagen (16) für ein am Rutscher-Sattel oder Sitz (10) aufsitzendes Kleinkind (31) ausgelegt sind.

7. Kinderrutscher nach Anspruch 1, **dadurch gekennzeichnet,**
**dass** der Körper (2) die Form einer Platte besitzt und aus Holz oder Kunststoff oder einer Kombination aus diesen Materialien besteht und dass bei Ausführung des Körpers aus Holz eine Dicke von ca. 2,5 - 5 cm, vorzugsweise ca. 4 cm vorgesehen ist.

8. Kinderrutscher nach den Ansprüchen 1 bis 4, **dadurch gekennzeichnet,**
**dass** der Sitz (10) für eine Sitzhöhe (28) von ca. 15 - 20 cm, vorzugsweise maximal 18 cm ausgelegt ist und die glatte Körperoberseite (Rumpf-Rücken) darstellt oder als schmaler Sattel mit einer Breite von höchstens 3-facher Dicke des Körpers, vorzugsweise ca. 9 cm ausgelegt ist.

9. Kinderrutscher nach Anspruch 1, **dadurch gekennzeichnet,**
**dass** die Griffe (20) in Richtung Sitzfläche oder Sitz (10) im Verhältnis zu den Vorderrädern (14) zumindest 1 - 12 cm, vorzugsweise 6 cm nach hinten versetzt und in einer Griffhöhe (29) zum Boden von ca. 25 - 40 cm, vorzugsweise von 30 cm angeordnet sind.

10. Kinderrutscher nach Anspruch 1, **dadurch gekennzeichnet,**
**dass** am Vorderende des Kopfes (3) und/oder Rückseite des Hinterteiles (7) des Körpers (2) mindestens je eine Zugeinrichtung (32, 33) z. B. in Form einer Kordel (34) oder eines Seiles o. ä. vorgesehen ist, vorzugsweise mit einer endseitigen Verdickung in Form einer Kugel oder spulenförmigen Körpers (35) o. ä..

11. Kinderrutscher nach den Ansprüchen 1 bis 10, **dadurch gekennzeichnet,**
**dass** der Körper (2) mit einem textilen Überzug (42, 43) versehen ist, z. B. vorzugsweise aus einem weichen, flauschigen, und/oder pelzähnlichen Material.

12. Kinderrutscher nach Anspruch 1, **dadurch gekennzeichnet,**
**dass** der Überzug (42, 43) abnehmbar und reinigbar oder waschbar ist, vorzugsweise in schlauchartiger Ausführung zum auf den Körper Schieben von hinten nach vorne und vorne Befestigen und/oder schließen über Druck- oder Klettverschluss oder Ähnlichem.

13. Kinderrutscher Nach Anspruch 11 und 12, **dadurch gekennzeichnet,**
**dass** zwischen äußerem Überzug (42) und Körper (2) ein weiches Innen-Futter (43) vorgesehen ist, mit im wesentlichen gleicher Form und Abmessungen wie der äußere Überzug (42) und das mit dem äußeren Überzug (42) fest verbunden ist, oder einen separaten, abnehmbaren Zwischen-Überzug darstellt.
